# EUROPÄISCHE PATENTSCHRIFT

(11) **EP 3 864 326 B1**
(45) Veröffentlichungstag und Bekanntmachung des Hinweises auf die Patenterteilung: **21.08.2024**
(21) Anmeldenummer: 19787181.7
(22) Anmeldetag: 09.10.2019
(51) Int. Cl.: F16K 1/44

(54) **VENTIL**
VALVE
SOUPAPE

(30) Priorität: 11.10.2018 DE 102018217449
(43) Veröffentlichungstag der Anmeldung: 18.08.2021
(73) Patentinhaber: Vitesco Technologies GmbH, 93055 Regensburg (DE)
(72) Erfinder: WEIS, Christian, 81737 München (DE); PETCA, Eduard Cornel, 81737 München (DE)
(74) Vertreter: Vitesco Technologies
(86) Internationale Anmeldenummer: PCT/EP2019/077302
(87) Internationale Veröffentlichungsnummer: WO 2020/074557

(56) Entgegenhaltungen:
- EP-A1- 3 561 344
- EP-B1- 3 628 853
- GB-A- 1 347 926
- JP-A- 2002 286 150
- JP-A- H05 263 992
- US-A- 6 047 690

## Beschreibung

Gegenstand der Erfindung ist ein Ventil mit einem Antrieb, einem mit dem Antrieb verbundenen Stößel, zwei Schließkörper, die mit dem Stößel verbunden sind und von diesem derart bewegbar sind, dass sie in Anlage an je einem Dichtsitz oder von diesem weg bewegbar sind.

Solche Ventile werden zum Öffnen und Verschließen von Abgasleitungen in Kraftfahrzeugen eingesetzt und sind somit bekannt. Das Dokument JP H05 263992 A offenbart ein Durchflussregelventil, welches ein präzises Einstellen einer Ventilöffnungsposition ermöglicht. Das Ventil weist einen Motor auf, der an einem Ventilgehäuse befestigt ist und ein Bewegen eines Ventilstößels ermöglicht. An dem Ventilstößel ist ein erster Ventilkörper angeordnet, der ein Halterohr aufweist, mittels dessen er mit einem zweiten Ventilkörper verbunden ist. Das Dokument JP 2002 286150 A offenbart ein Stromregelventil, das ein genaues Einstellen einer Ventilöffnungsposition ermöglicht. Ein Motor ist an einem Ventilgehäuse befestigt, und ein bewegliches Element des Motors ist so positioniert, dass es in ein Druckelement eingepasst werden kann. Ein erstes und ein zweites Ventilelement sind mit einem Halterohr verbunden und an einem unteren Abschnitt eines Ventilschafts angeordnet, um beim Einstellen der Ventilöffnungsposition einen Fluidfluss durch das Stromregelventil freizugeben. GB 1 347 926 A offenbart ein Ventil nach dem Stand der Technik gemäß dem Oberbegriff von Anspruch 1.

Wichtig für die Funktion solcher Ventile ist die Dichtheit, mit der das Ventil die Leitung verschließt. Gerade bei Gasen ist das Erreichen einer geringen Leckrate mit hohem Aufwand verbunden. Die Ventilsitze und die Dichtfläche der Schließkörper müssen dicht aneinander anliegen. Deren Oberflächen müssen eine hohe Oberflächengüte hinsichtlich Rauheit und Toleranzen aufweisen. Gleichzeitig müssen die Dichtfläche und der Ventilsitz sehr geringen Formtoleranzen genügen. Schließlich muss die Bewegung des Ventilkörpers über den Stößel und den Antrieb den hohen Anforderungen an die Lagetoleranz entsprechen. Dazu werden die Ventilkörper auf den Stößel aufgeschoben. Anschließend wird der Stößel ins Gehäuse eingelegt, wenn er seine Einbaulage erreicht hat, können die Schließkörper am Stößel befestigt werden. Die Befestigung erfolgt mittels Schweißen. Die tief im Gehäuse befindlichen Schließkörper erschweren dabei den Zugang mit dem Schweißwerkzeug, wodurch sich der Schweißvorgang sehr aufwändig gestaltet. Es ist weiter bekannt die Schließkörper mit zwei Dichtflächen auszubilden, um die infolge des komplizierten Schweißprozesses zwangsläufigen Fertigungstoleranzen wieder auszugleichen. Nachteilig hierbei ist der zusätzliche Aufwand der Dichtflächen, um die fertigungsbedingten Toleranzen auszugleichen.

Der Erfindung liegt damit die Aufgabe zugrunde, ein Ventil zu schaffen, welches mit geringem Aufwand herstellbar ist, dabei eine möglichst geringe Leckrate besitzt und das langzeitstabil arbeitet. Eine weitere Aufgabe der Erfindung besteht darin, ein Ver-fahren zur Herstellung eines solchen Ventils aufzuzeigen.

Die Aufgabe wird mit einem Ventil mit den Merkmalen des Anspruchs 1 gelöst.

Das Vorsehen einer Hülse, welche auf den Stößel aufschiebbar ist, und an der die Schließkörper befestigt sind, ermöglicht die Ausbildung einer Baugruppe, welche bereits außerhalb des Ventilgehäuses vormontiert werden kann und anschließend in das Gehäuse, genauer gesagt auf den Stößel aufgeschoben wird. Dadurch das sich erfindungsgemäß einen Teil der Befestigungsprozesse außerhalb des Gehäuses durchführen lassen, können diese aufgrund der besseren Zugänglichkeit deutlich schneller und somit einfacher durchgeführt werden. Gleichzeitig reduziert sich dadurch die Anzahl der im Ventilgehäuse durchzuführenden Befestigungsprozesse. Damit sind nur noch die leichter herzustellenden Befestigungsprozesse im Ventilgehäuse vorzunehmen, was den Aufwand zur Herstellung des Ventils weiter deutlich verringert. Infolge des erfindungsgemäßen Aufbaus und der leichter herzustellenden Befestigungsprozesse ist es zudem möglich die engen Toleranzen einzuhalten und eine besonders geringe Leckrate zu gewährleisten.

Eine besonders zuverlässige und langzeitstabile Verbindung der Hülse mit dem Stößel wird dadurch erreicht, dass die Hülse mit dem Stößel verschweißt ist.

In einer anderen vorteilhaften Ausgestaltung ist die Hülse mit dem Stößel verpresst. Diese Verbindung zeichnet sich durch besonders geringen Aufwand aus.

Die Schließkörper sind sicher mit der Hülse verbunden, indem sie mit dieser verschweißt sind.

Die zweite Aufgabe der Erfindung wird dadurch gelöst, dass zumindest ein Schließ-körper mit der Hülse verschweißt wird, die Hülse auf en Stößel aufgeschoben wird, bis der Schließkörper am Dichtsitz anliegt und anschließend der andere Schließkörper mit der Hülse verschweißt und/oder die Hülse mit dem Stößel verbunden wird.

Das erfindungsgemäße Verfahren erlaubt zumindest einen Schließkörper an der Hülse zu befestigen, um so eine Vormontagebaugruppe herzustellen.

Indem die Schweißstelle frei zugänglich ist, lässt sich die Vormontagebaugruppe schnell und zuverlässig herstellen. Schwierige Schweißverbindungen aufgrund der schweren Zugänglichkeit im Ventilgehäuse werden so vermieden. Anschließend wird die vormontierte Baugruppe auf den Stößel aufgeschoben, bis zumindest ein Schließkörper an seinem Dichtsitz anliegt. Sodann wird der andere Schließkörper an den ihm zugeordneten Dichtsitz geschoben und mit der Hülse befestigt und/oder die Hülse mit dem Stößel fest verbunden.

In einer weiteren Ausgestaltung sind beide Schließkörper zur Bildung der Vormontagebaugruppe mit der Hülse verschweißt, bevor diese auf den Stößel aufgeschoben wird. Auch diese Vormontagebaugruppe zeichnet sich aufgrund der frei zugänglichen Schweißstellen durch eine besonders einfache Herstellbarkeit aus. Die Abstandstole-ranzen der Dichtsitze lassen sich durch Einbeziehung der thermischen Verhältnisse während des Betriebs kompensieren, so dass auch mit dieser Vormontagebaugruppe ein Ventil mit sehr geringen Leckraten geschaffen wird.

In einer vorteilhaften Ausgestaltung ist die Hülse mit dem Stößel verschweißt, wodurch eine sichere und langzeitstabile Verbindung erzeugt wird.

Gemäß einer anderen vorteilhaften Ausgestaltung lässt sich die Verbindung von Hülse und Stößel dadurch erreichen, dass beide Teile miteinander verpresst werden.

An einem Ausführungsbeispiel wird die Erfindung näher erläutert. Dabei zeigen
- Fig. 1: ein Ventil nach dem Stand der Technik und
- Fig. 2: die Ventilkammer eines erfindungsgemäßen Ventils.

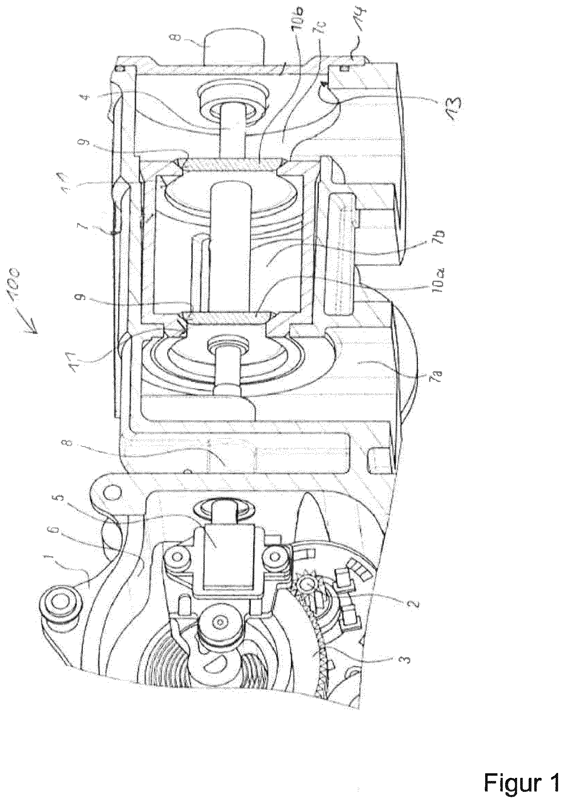

Figur 1 zeigt ein Ventil 100 gemäß einem Ausführungsbeispiel zum Öffnen und Schließen einer Abgasleitung. Das Ventil 100 in Figur 1 weist ein Gehäuse 1 auf, in dem ein Elektromotor 2 angeordnet ist. Mittels eines Getriebes 3 wird die Drehbewegung des Elektromotors 2 in eine lineare Bewegung eines Stößels 4 umgewandelt. Am Getriebe 3 ist ein Sensor 5 angeordnet, der mit einem am Stößel 4 befestigten Magneten zusammenwirkt. Der Stößel 4 erstreckt sich von der Getriebekammer 6 bis in eine Ventilkammer 7, wobei der Stößel 4 an zwei Stellen 8 gelagert ist. Die Ventilkammer 7 besteht aus drei hintereinander liegenden Teilkammern 7a, 7b, 7c, die jeweils durch einen Dichtsitz 9 voneinander getrennt sind. Zwei Schließkörper 10a, 10b sind so auf dem Stößel 4 angeordnet, dass sie sich bei einer Bewegung des Stößels 4 entlang einer Längsachse des Stößels 4 an den jeweiligen Dichtsitz 9 anlegen und eine Öffnung 11 abdichten oder vom Dichtsitz 9 wegbewegen und die Öffnung 11 freigeben, dass ein Gas von einer Ventilkammer 7 in die andere strömen kann.

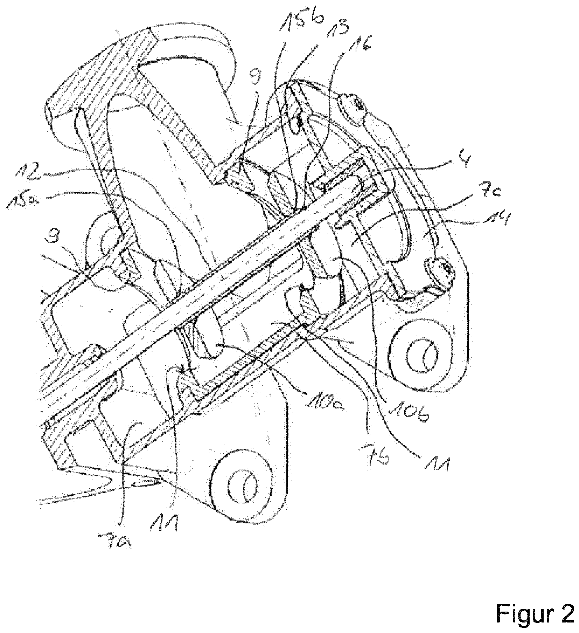

In Figur 2 ist auf dem Stößel 4 ist eine Hülse 12 angeordnet, die zwei scheibenförmige Schließkörper 10a, 10b trägt. Die Schließkörper 10a, 10b sind über zwei Schweißverbindungen 15a, 15b mit der Hülse 12 verschweißt, dass sie in der geschlossenen Stellung des Ventils an den jeweiligen Dichtsitzen 9 anliegen, wodurch sie die Öffnungen 11 verschließen, so dass kein Gas aus einer der Ventilkammern 7 über die anderen Ventilkammern 7 ausströmen kann. In der geöffneten Stellung des Ventils bewegt sich der Stößel 1 in Richtung der Kammer 7c. Die Schließkörper 10 bewegen sich von den Dichtsitzen 9 weg, sodass die Öffnungen 11 offen sind und Gas aus der Kammer 7b über die Kammern 7a, c ausströmen kann.

In der geschlossenen Stellung des Ventils beträgt die Leckrate nahezu Null. Erreicht wird das, indem der Schließkörper 10a auf die Hülse 12 aufgeschoben und mit dieser mittels einer Schweißverbindung 15a verschweißt wird. Dies erfolgt außerhalb des Ventils. Hülse 12 und Schließkörper 10a bilden eine Vormontagebaugruppe. Anschließend wird die Vormontagebaugruppe in das Gehäuse 1 eingebracht, indem die Hülse 12 auf den Stößel 4 in Richtung des Getriebes 3 aufgeschoben und mit dem Stößel gefügt wird. Die Vormontagebaugruppe wird dazu durch eine Öffnung 13 eingeführt. Dabei wird die Hülse 12 soweit auf den Stößel 4 aufgeschoben, bis der Schließkörper 10a an seinem Dichtsitz 9 anliegt. Anschließend wird der andere Schließkörper 10b auf der Hülse 12 derart positioniert, dass er ebenfalls an seinem Dichtsitz 9 anliegt. In dieser Position wird der Schließkörper 10b mit der Hülse 12 verschweißt. Die Hülse 12 wird ebenfalls mit dem Stößel 4 mittels einer Schweißverbindung 16 verschweißt. Die Schweißverbindungen 15b, 16 sind relativ gut zugänglich, wodurch die Schweißprozesse in einfacher Weise durchführbar sind. Anschließend wird die Öffnung 13 mit einem Deckel 14 zur Begrenzung der Kammer 7c verschlossen.

## Patentansprüche

1. Ventil (100) mit einem Antrieb (2, 3) und einem mit dem Antrieb (2, 3) verbundenen Stößel (4) und zwei Schließkörper (10a, 10b), die mit dem Stößel (4) verbunden sind und von diesem derart bewegbar sind, dass sie in Anlage an je einem Dichtsitz (9) des Ventils (100) oder von diesem weg bewegbar sind, wobei die Schließkörper (10a, 10b) auf einer Hülse (12) fest angeordnet und jeweils mit der Hülse (12) verschweißt sind, **dadurch gekennzeichnet, dass** die Hülse (12) auf den Stößel (4) aufgeschoben und mit diesem fest verbunden und mit diesem unmittelbar verschweißt ist.

2. Verfahren zur Herstellung eines Ventils (100) nach Anspruch 1, **dadurch gekennzeichnet, dass** zumindest ein Schließkörper (10a) mit der Hülse (12) verschweißt wird, die Hülse (12) auf den Stößel (4) aufgeschoben wird, bis der Schließkörper (10a) am Dichtsitz (9) anliegt und anschließend der andere Schließkörper (10b) mit der Hülse (12) verschweißt und/oder die Hülse (12) mit dem Stößel (4) verbunden wird.

3. Verfahren nach Anspruch 2, **dadurch gekennzeichnet, dass** die Hülse (12) mit dem Stößel (4) verschweißt wird.

4. Verfahren nach Anspruch 2, **dadurch gekennzeichnet, dass** die Hülse (12) mit dem Stößel (4) verpresst wird.

## Claims

1. Valve (100) having a drive (2, 3), and having a plunger (4) which is connected to the drive (2, 3), and having two closing bodies (10a, 10b) which are connected to the plunger (4) and are able to be moved by the latter in such a way that they able to be moved into abutment against in each case one sealing seat (9) of the valve (100) or away therefrom, wherein the closing bodies (10a, 10b) are arranged fixedly on a sleeve (12) and are each welded to the sleeve (12), **characterized in that** the sleeve (12) is slid onto the plunger (4) and is connected fixedly, and welded directly, to the latter.

2. Method for producing a valve (100) according to Claim 1, **characterized in that** at least one closing body (10a) is welded to the sleeve (12), the sleeve (12) is slid onto the plunger (4) until the closing body (10a) bears against the sealing seat (9), and subsequently the other closing body (10b) is welded to the sleeve (12) and/or the sleeve (12) is connected to the plunger (4).

3. Method according to Claim 2, **characterized in that** the sleeve (12) is welded to the plunger (4).

4. Method according to Claim 2, **characterized in that** the sleeve (12) is pressed together with the plunger (4).

## Revendications

1. Vanne (100) avec un système d'entraînement (2, 3) et une tige coulissante (4) reliée au système d'entraînement (2, 3) et deux corps de fermeture (10a, 10b) qui sont reliés à la tige coulissante (4) et sont aptes à être déplacés par celle-ci de telle sorte qu'ils soient aptes à être amenés en contact avec un siège d'étanchéité (9) respectif de la vanne (100) ou à s'en éloigner, les corps de fermeture (10a, 10b) étant agencés de manière fixe sur un manchon (12) et étant soudés chacun au manchon (12), **caractérisée en ce que** le manchon (12) est enfilé sur la tige coulissante (4) et est relié de manière fixe à celle-ci et est soudé directement à celle-ci .

2. Procédé de fabrication d'une vanne (100) selon la revendication 1, **caractérisé en ce qu'**au moins un corps de fermeture (10a) est soudé au manchon (12), le manchon (12) est enfilé sur la tige coulissante (4) jusqu'à ce que le corps de fermeture (10a) soit en contact avec le siège d'étanchéité (9), puis l'autre corps de fermeture (10b) est soudé au manchon (12) et/ou le manchon (12) est relié à la tige coulissante (4).

3. Procédé selon la revendication 2, **caractérisé en ce que** le manchon (12) est soudé à la tige coulissante (4).

4. Procédé selon la revendication 2, **caractérisé en ce que** le manchon (12) est comprimé avec la tige coulissante (4) .
